# FASCICULE DE BREVET EUROPEEN

(11) **EP 1 524 802 B1**
(45) Date de publication et mention de la délivrance du brevet: **15.01.2014**
(21) Numéro de dépôt: 04292448.0
(22) Date de dépôt: 14.10.2004
(51) Int. Cl.: H04W 52/28, H04W 52/34

(54) **Adaptation dynamique du niveau de la puissance des points d'accès radio dans un réseau de communications sans fil**
Dynamische Adaptation der Sendeleistung des Funkzugangspunkten in einem drahtlosen Kommunikationsnetzwerk
Dynamic adaptation of the power of radio access points in a wireless communication network

(30) Priorité: 17.10.2003 FR 0312134
(43) Date de publication de la demande: 20.04.2005
(73) Titulaire: Alcatel Lucent, 75007 Paris (FR)
(72) Inventeur: Pinault, Francis, 92270 Bois-Colombes (FR)
(74) Mandataire: Therias, Philippe

(56) Documents cités:
- EP-A- 1 058 474
- US-A1- 2002 085 719
- US-A1- 2003 163 579
- ANONYMOUS: "Spectrum re-use in a wireless LAN" RESEARCH DISCLOSURE, KENNETH MASON PUBLICATIONS, HAMPSHIRE, GB, vol. 337, no. 101, mai 1992 (1992-05), XP007117732 ISSN: 0374-4353

## Description

L'invention concerne le domaine des réseaux de communications sans fil.

Certains réseaux de communications sans fil comportent plusieurs points d'accès auxquels peuvent se connecter des terminaux de communication adaptés à cet effet. Dans ce type de réseau, chaque point d'accès au réseau dispose, d'une part, d'une puissance de transmission qui définit une zone de couverture dans laquelle il peut échanger des données avec des terminaux de communication, et d'autre part, de ressources qui définissent le trafic maximal qu'il peut accepter. Généralement, les ressources des points d'accès sont surdimensionnées afin qu'ils puissent supporter des charges exceptionnelles.

Lorsqu'un trop grand nombre de terminaux sont connectés à un même point d'accès, il arrive fréquemment que le niveau de qualité de service (ou QoS) offert par le réseau, via ce point d'accès, soit sensiblement inférieur à celui qui est dû aux utilisateurs des terminaux connectés, alors que d'autres points d'accès au réseau sont en sous-charge. En d'autres termes, dans les réseaux sans fil actuels il n'est pas possible d'effectuer un équilibrage de charge dynamique.

EP 0 615 395 A1 décrit la réglage de puissance de transmission d'un point d'accès en fonction du nombre de terminaux connectés à ce point d'accès.

L'invention a donc pour but de remédier à cet inconvénient.

Elle propose à cet effet un dispositif selon la revendication 1 dédié à la gestion de points d'accès radio d'un réseau de communications sans fil, et comprenant des moyens de traitement chargés de déterminer dynamiquement le niveau de puissance de transmission de chaque point d'accès en fonction de la présence et/ou des localisations respectives des terminaux de communication par rapport à ces points d'accès et d'au moins deux critères choisis, de sorte que lesdits points d'accès instaurent ces niveaux.

Par exemple, un critère choisi est une comparaison à un premier seuil représentatif du nombre maximal de terminaux de communication qui peuvent être connectés à un point d'accès au réseau. Dans ce cas, les moyens de traitement sont chargés de comparer au premier seuil le nombre de terminaux de communication connectés à chaque point d'accès au réseau, puis de déterminer le niveau de puissance de transmission de chaque point d'accès en fonction au moins du résultat de la comparaison qui le concerne. En variante, les moyens de traitement peuvent être agencés de manière à déterminer le niveau de puissance de transmission de chaque point d'accès en fonction de toutes les comparaisons effectuées pour chaque point d'accès et de données d'information représentatives de la topologie du réseau.

Un autre critère choisi peut être une comparaison à un second seuil représentatif du trafic maximal que chaque point d'accès au réseau peut supporter. Dans ce cas, les moyens de traitement sont chargés de comparer au second seuil le trafic en cours au niveau de chaque point d'accès au réseau, puis de déterminer le niveau de puissance de transmission de chaque point d'accès en fonction au moins du résultat de la comparaison qui le concerne. En variante, les moyens de traitement peuvent être agencés de manière à déterminer le niveau de puissance de transmission de chaque point d'accès en fonction de toutes les comparaisons effectuées pour chaque point d'accès et de données d'information représentatives d'un modèle de trafic du réseau.

Le dispositif de gestion peut également comporter des moyens de mémorisation chargés de stocker les données d'information utiles aux déterminations effectuées par ses moyens de traitement.

L'invention propose également un équipement de gestion de points d'accès radio d'un réseau de communications sans fil équipé d'un dispositif de gestion du type de celui présenté ci-avant.

L'invention propose en outre un point d'accès radio pour un réseau de communications sans fil comprenant des moyens de transmission et des moyens de contrôle chargés d'adapter le niveau de puissance des moyens de transmission en fonction d'instructions reçues d'un équipement de gestion du type de celui présenté ci-avant.

L'invention est particulièrement bien adaptée, bien que de façon non exclusive, aux réseaux de communications sans fil agencés sous la forme de réseaux locaux (ou WLAN pour « Wireless Local Area Network »), ainsi qu'aux réseaux cellulaires, par exemple de type GSM ou UMTS.

D'autres caractéristiques et avantages de l'invention apparaîtront à l'examen de la description détaillée ci-après, et des dessins annexés, sur lesquels :
- la figure 1 illustre de façon schématique un exemple de réalisation d'un réseau local sans fil équipé de points d'accès selon l'invention placés dans de premières configurations, et
- la figure 2 illustre de façon schématique un exemple de réalisation d'un réseau local sans fil équipé d'un serveur de gestion selon l'invention et de points d'accès selon l'invention placés dans de secondes configurations.

Les dessins annexés pourront non seulement servir à compléter l'invention, mais aussi contribuer à sa définition, le cas échéant.

L'invention a pour objet de permettre la gestion de la charge des points d'accès à un réseau de communications sans fil.

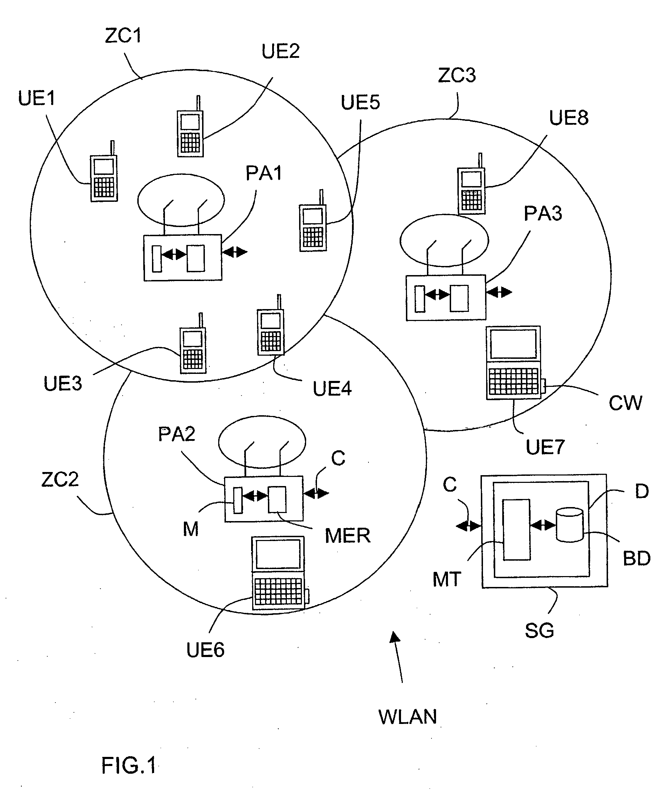

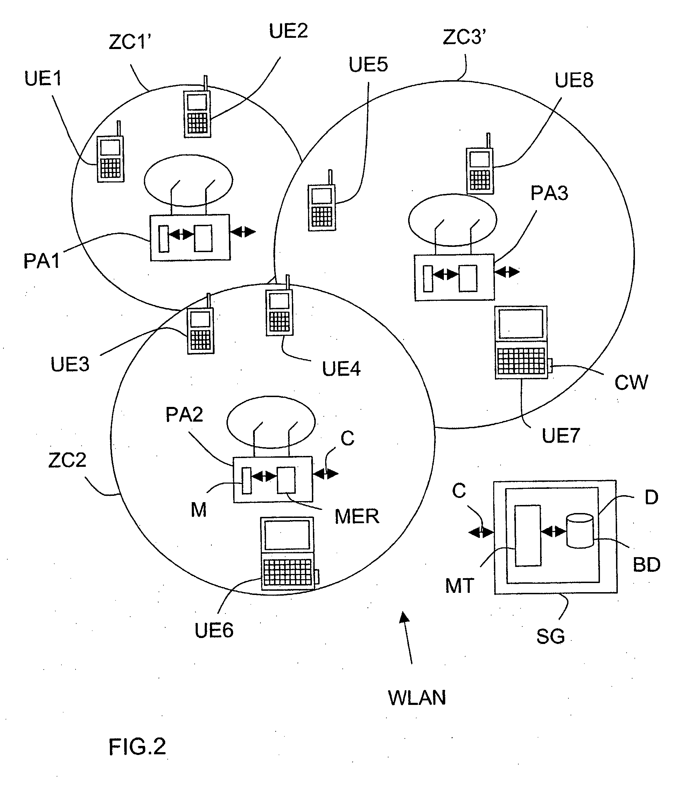

Le réseau de communications sans fil WLAN illustré sur les figures 1 et 2 comporte des points d'accès radio PAi (ici i = 1 à 3, mais il peut prendre n'importe quelle valeur supérieure ou égale à 2) permettant à des terminaux de communication sans fil adaptés UEj (ici j = 1 à 8, mais il peut prendre n'importe quelle valeur), qui se trouvent situés dans leurs zones de couverture ZCi respectives, de se connecter audit réseau.

On entend ici par « terminal de communication sans fil » (ci-après terminal UE), tout équipement de communication équipé d'une carte WLAN CW, amovible ou intégrée, capable, ici, d'accéder au réseau WLAN lorsqu'il se trouve situé dans l'une de ses zones de couverture ZCi. Par conséquent, un terminal UE est par exemple un téléphone mobile, un micro-ordinateur portable (ou mobile), ou un assistant numérique personnel (ou PDA).

Le réseau sans fil WLAN est ici un réseau local sans fil (ou « Wireless Local Area Network ») appartenant par exemple à un groupe d'entreprises. Mais, dans des variantes il pourrait être de type Bluetooth ou UWB (pour « Ultra Wide Band »). Il pourrait également s'agir d'un réseau non local, par exemple de type UMTS, EDGE ou GSM.

Bien que cela ne soit pas représenté, un tel réseau peut éventuellement être raccordé par l'un au moins de ses points d'accès PAi à un routeur périphérique (ou « edge router ») lui-même raccordé à un ou plusieurs réseaux publics de téléphonie et/ou à un ou plusieurs réseaux publics de données, comme par exemple un réseau à protocole Internet (ou IP). Un tel routeur périphérique assure la fonction de serveur d'appels (ou « call server »), c'est-à-dire qu'il est chargé d'établir les liaisons entre les terminaux UEj, qui sont situés dans l'une des zones de couverture ZCi du réseau WLAN et qui de ce fait sont susceptibles de se raccorder par voie d'onde à ses points d'accès PAi, et les réseaux publics de téléphonie et/ou de données RPD.

Selon l'invention, chaque point d'accès PAi dispose, d'une part, d'un module d'émission/réception MER, assurant les liaisons avec les terminaux UEj qui se trouvent situés dans sa zone de couverture ZCi, et dont le niveau de puissance de transmission peut être ajusté dynamiquement, et d'autre part, d'un module de contrôle MC chargé d'ajuster ledit niveau en fonction d'instructions reçues du réseau WLAN.

Ces instructions sont élaborées par un dispositif de gestion D, qui est ici implanté dans un serveur de gestion SG du réseau WLAN, couplé aux points d'accès PAi, par voie d'onde ou, comme illustré, par voie filaire C.

Plus précisément, le dispositif de gestion D comprend un module de traitement MT chargé de déterminer dynamiquement le niveau de puissance de transmission de chaque point d'accès PAi en fonction **de la présence et/ou** des localisations respectives des terminaux de communication UEj par rapport à ces points d'accès PAi et d'au moins un critère choisi.

Le niveau de puissance de transmission d'un point d'accès PAi détermine les dimensions de sa zone de couverture ZCi dans une application de type champ libre pour la transmission des ondes radio. Ces dimensions peuvent être pondérées par des caractéristiques de propagation spécifiques aux lieux où se trouvent implantés les points d'accès, comme par exemple dans des aéroports ou des locaux (ou bureaux) d'entreprises.

Au moins deux critères peuvent être envisagés. Selon la configuration du module de traitement MT, ces critères peuvent être utilisés séparément ou en combinaison.

Par exemple, le critère choisi peut être une comparaison à un premier seuil S1 représentatif du nombre maximal de terminaux UEj qui peuvent être connectés à un point d'accès au réseau PAi.

Le critère choisi peut être également une comparaison à un second seuil S2 représentatif du trafic maximal que chaque point d'accès au réseau PAi peut supporter sans que cela n'affecte la qualité de service (ou QoS). On entend ici par « trafic en cours » le taux d'utilisation des ressources, du point d'accès considéré, dédiées à un instant donné aux connexions entre les terminaux UEj et le réseau WLAN.

Des critères plus complexes peuvent être également envisagés. En effet, le niveau de puissance de transmission de chaque point d'accès PAi peut être déterminé en fonction, d'une part, de l'ensemble des comparaisons de seuil (S1 et/ou S2) effectuées pour chaque point d'accès PAi, et d'autre part, de données d'information représentatives de la topologie du réseau et/ou d'un modèle de trafic du réseau. Ces données d'information sont préférentiellement stockées dans une base de données BD du dispositif de gestion D, raccordée au module de traitement MT. Elles contiennent par exemple les coefficients de propagation liés aux bâtiments, les types de trafic communément employés dans l'entreprise et leurs consommations respectives en terme de bande passante.

Afin d'assurer sa détermination dynamique de niveaux, le module de traitement MT est alimenté en informations représentatives du nombre de terminaux UEj connectés à chaque point d'accès PAi du réseau WLAN et/ou du trafic en cours au niveau de chacun desdits points d'accès. Ces informations peuvent être transmises, par exemple périodiquement, par les terminaux UEj de façon automatique, ou bien à la requête du module de traitement MT.

Par exemple, le module de traitement MT est chargé de comparer au premier seuil S1 le nombre de connexions établies avec des terminaux UEj par chaque point d'accès PAi. Il est important de noter que des points d'accès PA peuvent disposer de capacités différentes, de sorte qu'ils peuvent être associés à des premiers seuils de comparaison de valeurs différentes. Par exemple, lorsque le module de traitement MT détecte que l'un des points d'accès PAi est connecté à un nombre de terminaux UEj supérieur au premier seuil S1 correspondant, il analyse les résultats des comparaisons concernant les autres points d'accès PAi' de manière à déterminer si l'un au moins d'entre eux est en mesure d'assurer (ou supporter) certaines connexions du point d'accès surchargé PAi en augmentant éventuellement les dimensions de sa zone de couverture ZCi'.

Si le point d'accès PAi' peut supporter une ou des connexions supplémentaires, et bien entendu si des terminaux UEj occasionnant la surcharge du point d'accès PAi se trouvent au voisinage de la zone de couverture ZCi' initiale du point d'accès PAi', alors le module de traitement MT détermine, d'une part, le nouveau niveau de puissance nécessaire et suffisant au point d'accès PAi' pour assurer la ou des connexions du point d'accès PAi, et d'autre part, le nouveau niveau de puissance nécessaire et suffisant au point d'accès PAi pour assurer ses connexions restantes.

Il est ici rappelé que les réseaux cellulaires standardisés, locaux ou publics, mettent à disposition des protocoles permettant d'établir ce que l'on appelle communément des « handovers » pour un trafic de voix ou de données. Les caractéristiques de ces protocoles permettent de savoir, généralement en fonction du type du réseau, quelles sont les équipements qui sont « vus » par chaque station de base ou point d'accès de ces réseaux. Par conséquent, pour qu'un module de traitement MT puisse déterminer si des terminaux UE se trouvent au voisinage d'une autre zone de couverture ZC que celle dans laquelle ils sont situés, il n'a qu'à utiliser sa connaissance de la topologie du réseau traité et/ou les informations transmises par les équipements du réseau.

Sur les figures 1 et 2 se trouvent matérialisés deux exemples de configuration du réseau WLAN correspondant à des situations avant et après ajustement de niveau. On considère ici, à titre d'exemple, que le nombre maximal de connexions que peuvent supporter les points d'accès au réseau PAi (c'est-à-dire S1) est égal à quatre, et que le nombre de niveaux de puissance que peuvent appliquer les points d'accès au réseau PAi est égal à trois. Le premier niveau correspond par exemple au niveau le plus faible et donc à la zone de couverture ZC la moins étendue.

Dans la situation de la figure 1, le module de traitement MT sait, d'une première part, que le premier point d'accès PA1 est connecté à cinq terminaux UE1 à UE5 et que son niveau de puissance en cours est le deuxième, d'une deuxième part, que le deuxième point d'accès PA2 est connecté à un seul terminal UE6 et que son niveau de puissance en cours est le deuxième, et d'une troisième part, que le troisième point d'accès PA3 est connecté à deux terminaux UE7 et UE8 et que son niveau de puissance en cours est le deuxième. Par ailleurs, le module de traitement MT sait, d'une part, que les terminaux UE3 et UE4 se trouvent dans la zone de couverture ZC2 du deuxième point d'accès PA2, et d'autre part, que le terminal UE5 se trouve dans le voisinage de la zone de couverture ZC3 du troisième point d'accès PA3.

Le module de traitement MT déduit de ces informations, d'une première part, qu'il est inutile d'augmenter le niveau de puissance du premier point d'accès PA1 étant donné qu'il est déjà en surcharge de connexion, d'une deuxième part, que le deuxième point d'accès PA2 peut supporter les connexions des deux terminaux UE3 et UE4 sans qu'il faille augmenter son niveau de puissance, et d'une troisième part, que le troisième point d'accès PA3 peut supporter la connexion du terminal UE5 à condition d'augmenter sa puissance d'un niveau. Par ailleurs, le module de traitement MT déduit des informations que, du fait de la localisation des terminaux UE1 et UE2, le premier point d'accès PA1 peut diminuer sa puissance de transmission d'un niveau.

Le module de traitement MT génère alors des instructions ordonnant, d'une part, au premier point d'accès PA1 de passer du niveau de puissance numéro deux au niveau de puissance numéro un, et d'autre part, au troisième point d'accès PA3 de passer du niveau de puissance numéro deux au niveau de puissance numéro trois.

A réception de leurs instructions respectives, les premier PA1 et troisième PA3 points d'accès les transmettent à leur module de contrôle MC qui configure en conséquence le module d'émission/réception MER auquel il est raccordé. Le premier point d'accès PA1 dispose alors, comme illustré sur la figure 2, d'une nouvelle zone de couverture ZC1' (plus petite que la précédente ZC1), le deuxième point d'accès PA1 dispose d'une zone de couverture ZC2 identique à la précédente, et le troisième point d'accès PA3 dispose d'une nouvelle zone de couverture ZC3' (plus grande que la précédente ZC3).

Bien entendu, de nombreuses autres situations peuvent être envisagées, prenant en compte éventuellement un autre critère que le premier S1, par exemple le second S2, ou bien à la fois les premier S1 et second S2 critères.

Ainsi, on peut envisager une situation dans laquelle le deuxième point d'accès PA2 est en mesure de supporter, en terme de nombre, deux connexions supplémentaires avec les deux terminaux UE3 et UE4, mais ne dispose pas de suffisamment de ressources disponibles pour assurer ces deux connexions supplémentaires. Par exemple, il peut supporter la connexion avec le terminal UE4. Dans ce cas, le module de traitement MT décide, d'une part, de maintenir les niveaux respectifs des premier PA1 et deuxième PA2 points d'accès, de sorte que le premier PA1 continue à assurer les connexions avec les terminaux UE1, UE2 et UE3 et que le deuxième PA2 assure les connexions avec les terminaux UE4 et UE6, et d'autre part, d'augmenter la puissance du troisième point d'accès PA3 de sorte qu'il assure les connexions avec les terminaux UE5, UE7 et UE8.

Le dispositif de gestion D peut être agencé de manière à transmettre des informations statistiques de trafic à une application de gestion de réseau chargée de signaler au gestionnaire du réseau qu'il est nécessaire d'optimiser la capacité de son réseau en ajoutant ou en enlevant un point d'accès à un endroit particulier.

Par ailleurs, le dispositif de gestion D peut être agencé de manière à générer des alarmes à destination d'un module d'administration de réseau en cas de saturation de trafic.

En outre, le module de gestion D peut être agencé, en cas de saturation de trafic constatée et d'une incapacité à réguler ledit trafic, de manière à ordonner la restriction de l'accès au réseau, via un point d'accès, à certains équipements prioritaires désignés dans une liste d'équipements prioritaires stockée dans une mémoire.

Le dispositif de gestion D selon l'invention, et notamment son module de traitement MT, et les modules de contrôle MC peuvent être réalisés sous la forme de circuits électroniques, de modules logiciels (ou informatiques), ou d'une combinaison de circuits et de logiciels.

Grâce à l'invention, il est désormais possible de maintenir de façon quasi constante la qualité de service au sein d'un réseau de communications sans fil. En outre, le niveau de puissance de chaque point d'accès pouvant être géré dynamiquement, d'une part, on peut effectuer en permanence un équilibrage de charge, et d'autre part, il n'est plus nécessaire de surdimensionner les capacités des réseaux de communications sans fil afin qu'ils supportent des situations exceptionnelles.

L'invention ne se limite pas aux modes de réalisation de dispositif de gestion D, de serveur de gestion SG et de point d'accès PA décrits ci-avant, seulement à titre d'exemple, mais elle englobe toutes les variantes que pourra envisager l'homme de l'art dans le cadre des revendications ci-après.

Ainsi, dans ce qui précède on a décrit un réseau de communications sans fil comprenant un serveur de gestion chargé de gérer de façon centralisée tous les points d'accès au réseau. Mais, on peut envisager que le réseau soit subdivisé en sous-ensembles disposant chacun d'un serveur de gestion.

## Revendications

1. Dispositif de gestion (D) de points d'accès radio (PAi) d'un réseau de communications sans fil (WLAN), **caractérisé en ce qu'**il comprend :
- des moyens de traitement (MT) propres à déterminer dynamiquement le niveau de puissance de transmission de chaque point d'accès (PAi) en fonction de la présence et/ou des localisations respectives de terminaux de communications (UEj) par rapport auxdits points d'accès (PAi), et d'au moins deux critères choisis, de sorte que lesdits points d'accès instaurent ledit niveau de puissance de transmission ;
- lesdits moyens de traitement (MT) étant agencés pour comparer à un premier seuil choisi (S1) le nombre de terminaux de communication (UEj) connectés à chaque point d'accès au réseau (PAi), le résultat pour le point d'accès de la comparaison au premier seuil (S1) définissant un premier des deux critères ; et
- lesdits moyens de traitement (MT) étant agencés pour comparer à un second seuil (S2) un trafic en cours au niveau de chaque point d'accès au réseau (PAi), le résultat pour le point d'accès de la comparaison au second seuil (S2) définissant le second des deux critères.

2. Dispositif selon la revendication 1, **caractérisé en ce que** lesdits moyens de traitement (MT) sont agencés pour déterminer le niveau de puissance de transmission de chaque point d'accès (PAi) en fonction des localisations respectives desdits terminaux de communications (UEj) par rapport auxdits points d'accès (PAi), des comparaisons effectuées pour chaque point d'accès, et de données d'information représentatives d'un modèle de trafic dudit réseau (WLAN).

3. Dispositif selon la revendication 2, **caractérisé en ce qu'**il comprend des moyens de mémorisation (BD) propres à stocker lesdites données d'informations.

4. Dispositif selon l'une des revendications 1 à 3, **caractérisé en ce qu'**il est agencé pour générer des alarmes à destination d'un module d'administration de réseau en cas de saturation de trafic.

5. Dispositif selon la revendication 4, **caractérisé en ce qu'**il est agencé, en cas de constatation d'une saturation de trafic et d'une incapacité à réguler ledit trafic, pour ordonner la restriction de l'accès au réseau, via un point d'accès, à certains équipements prioritaires choisis dans une liste d'équipements prioritaires.

6. Equipement de gestion (SG) de points d'accès radio (PAi) d'un réseau de communications sans fil (WLAN), **caractérisé en ce qu'**il comprend un dispositif de gestion (D) selon l'une des revendications 1 à 5.

## Patentansprüche

1. Vorrichtung (D) zur Verwaltung von Funkzugangspunkten (PAi) eines drahtlosen Kommunikationsnetzwerks (WLAN), **dadurch gekennzeichnet, dass** sie umfasst:
- Verarbeitungsmittel (MT), welche für die dynamische Bestimmung des Sendeleistungspegels eines jeden Zugangspunkts (PAi) in Abhängigkeit von der Anwesenheit und/oder den jeweiligen Standorten von Kommunikationsendgeräten (UEj) im Verhältnis zu den besagten Zugangspunkten (PAi) und von mindestens zwei ausgewählten Kriterien ausgelegt sind, damit die besagten Zugangspunkte den besagten Sendeleistungspegel einstellen;
- wobei die besagten Verarbeitungsmittel (MT) dazu eingerichtet sind, die Anzahl der an jedem Netzwerk-Zugangspunkt (PAi) angeschlossenen Kommunikationsendgeräte (UEj) mit einem ersten ausgewählten Grenzwert (S1) zu vergleichen, wobei das Ergebnis des Vergleichs mit dem ersten Grenzwert (S1) für den Zugangspunkt ein erstes der zwei Kriterien definiert; und
- wobei die besagten Verarbeitungsmittel (MT) dazu eingerichtet sind, einen aktuellen Verkehr auf Ebene eines jeden Netzwerk-Zugangspunktes (PAi) mit einem zweiten Grenzwert (S2) zu vergleichen, wobei das Ergebnis des Vergleichs mit dem zweiten Grenzwert (S2) für den Zugangspunkt ein zweites der zwei Kriterien definiert.

2. Vorrichtung nach Anspruch 1, **dadurch gekennzeichnet, dass** die besagten Verarbeitungsmittel (MT) dazu eingerichtet sind, den Sendeleistungspegel eines jeden Zugangspunktes (PAi) in Abhängigkeit von den jeweiligen Standorten der besagten Kommunikationsendgeräte (UEj) im Verhältnis zu den besagten Zugangspunkten (PAi), von den für jeden Zugangspunkt durchgeführten Vergleichen und von Informationsdaten, welche für die Verkehrsmodell des besagten Netzwerks (WLAN) repräsentativ sind, zu bestimmen.

3. Vorrichtung nach Anspruch 2, **dadurch gekennzeichnet, dass** sie Speichermittel (BD) umfasst, welche für das Speichern der besagten Informationsdaten ausgelegt sind.

4. Vorrichtung nach einem der Ansprüche 1 bis 3, **dadurch gekennzeichnet, dass** sie dazu eingerichtet ist, im Fall einer Verkehrsüberlastung Alarme für ein Netzwerkverwaltungsmodul zu erzeugen.

5. Vorrichtung nach Anspruch 4, **dadurch gekennzeichnet, dass** sie dazu eingerichtet ist, im Fall des Feststellens einer Verkehrsüberlastung und einer Unfähigkeit, den besagten Verkehr zu regulieren, die Einschränkung des Zugangs zum Netzwerk, über einen Zugangspunkt, für bestimmte, in einer Liste für vorrangige Einrichtungen ausgewählte vorrangige Einrichtungen anzuordnen.

6. Einrichtung (SG) zur Verwaltung von Funkzugangspunkten (PAi) eines drahtlosen Kommunikationsnetzwerks (WLAN), **dadurch gekennzeichnet, dass** sie eine Verwaltungsvorrichtung (D) gemäß einem der Ansprüche 1 bis 5 umfasst.

## Claims

1. A device (D) for managing radio access points (PAi) of a wireless communication network (WLAN), **characterized in that** it comprises:
- means of processing (MT) capable of dynamically determining the transmission power level of each access point (PAi) based on the presence and/or respective locations of communication terminals (UEj) relative to said access points (PAi), and on at least two chosen criteria, such that said access points institute said transmission power level;
- said means of processing (MT) being operative to compare to a first chosen threshold (S1) the number of communication terminals (UEj) connected to each network access point (PAi), the result for the access point of the comparison to the first threshold (S1) defining a first of the two criteria; and
- said means of processing (MT) being operative to compare to a second chosen threshold (S2) a current level of traffic in each network access point (PAi), the result for the access point of the comparison to the second threshold (S2) defining the second of the two criteria.

2. A device according to claim 1, **characterized in that** said means of processing (MT) are operative to determine the transmission power level of each access point (PAi) based on the respective locations of said communication terminals (UEj) relative to said access points (PAi), on comparisons made for each access point, and on information data representative of a traffic model of said network (WLAN).

3. A device according to claim 2, **characterized in that** it comprises means of memorization (BD) capable of storing said information data.

4. A device according to one of the claims 1 to 3, **characterized in that** it is operative to generate alarms sent to a network administration module in the event of excess traffic.

5. A device according to claim 4, **characterized in that** it is operative, if excess traffic is observed along with an inability to regulate said traffic, to order the restriction of network access, via an access point, to certain priority equipment chosen from a list of priority equipment.

6. An equipment for managing (SG) radio access points (PAi) of a wireless communication network (WLAN), **characterized in that** it comprises a management device (D) according to one of the claims 1 to 5.
